# EUROPEAN PATENT SPECIFICATION

(11) **EP 4 485 961 B1**
(45) Date of publication and mention of the grant of the patent: **22.04.2026**
(21) Application number: 24179530.1
(22) Date of filing: 03.06.2024
(51) Int. Cl.: H04N 25/40, H04N 25/583, H04N 25/773

(54) **IMAGING SYSTEM, MOVABLE APPARATUS, IMAGING METHOD, AND STORAGE MEDIUM**
BILDGEBUNGSSYSTEM, BEWEGLICHE VORRICHTUNG, BILDGEBUNGSVERFAHREN UND SPEICHERMEDIUM
SYSTÈME D'IMAGERIE, APPAREIL MOBILE, PROCÉDÉ D'IMAGERIE ET SUPPORT D'INFORMATIONS

(30) Priority: 29.06.2023 JP 2023106676
(43) Date of publication of application: 01.01.2025
(73) Proprietor: CANON KABUSHIKI KAISHA, Tokyo 146-8501 (JP)
(72) Inventor: NABESHIMA, Takuya, Tokyo, 146-8501 (JP)
(74) Representative: TBK

(56) References cited:
- US-A1- 2007 222 877
- US-A1- 2019 191 120
- US-A1- 2020 304 745
- US-A1- 2021 218 923

## Description

### BACKGROUND OF THE INVENTION

### Field of the Invention

The present invention relates to an imaging system, a movable apparatus, an imaging method, and a storage medium.

### Description of the Related Art

Recently, a photoelectric conversion apparatus that digitally counts the number of photons incident on avalanche photodiodes (APDs) and outputs the count value as a photoelectrically converted digital signal from pixels has been developed. In addition, for example, Japanese Patent No. 7223070 describes a photoelectric conversion apparatus with APDs having a configuration that enables multiple videos whose storage periods overlap to be output and thereby enables continuous shooting even in low light.

When a camera outputs an image for the purpose of recognition or viewing, it outputs the image after applying image processing such as noise reduction, flaw correction, or black level correction to the image in most cases. In addition, images suitable for recognition and viewing can be output by applying the image processing. Application of high-performance image processing basically has a small number of defects, and thus images can be output more effectively.

Furthermore, when such a camera is adopted in an in-vehicle camera, it can be used for self-driving and collision avoidance. In such a case, recognition needs to be performed as quickly as possible, and vehicles are desired to be controlled swiftly based on the recognition results.

However, when image processing is applied to an image output from the imaging sensor, the processing time increases, and a delay may take place in outputting the recognition result. In particular, if the processing is complicated, the processing becomes a burden, which leads to an increase in a delay time, and thus there is a possibility of control over the vehicle being delayed.
Further prior art documents are US 2020/304745 A1 showing an image capturing device, US 2007/222877 A1 showing an image sensing apparatus, image sensing system, and image sensing method, US 2019/191120 A1 showing an image sensor and US 2021/218923 A1 showing a solid-state imaging device and electronic device.

### SUMMARY OF THE INVENTION

An imaging system and an imaging method are defined by the independent claims.

Further, features of the present invention will become apparent from the following description of exemplary embodiments with reference to the attached drawings.

### BRIEF DESCRIPTION OF THE DRAWINGS

Fig. 1 is a diagram illustrating a configuration example of a photoelectric conversion element according to a first embodiment of the present invention.
Fig. 2 is a diagram illustrating a configuration example of a sensor board 11.
Fig. 3 is a diagram illustrating a configuration example of a circuit board 21.
Fig. 4 is a diagram illustrating an equivalent circuit of a pixel 101 and a signal processing circuit 103 corresponding to the pixel 101 from Figs. 2 and 3.
Fig. 5 is a diagram schematically illustrating a relationship between an operation of an APD 201 and an output signal.
Fig. 6 is a functional block diagram of an imaging apparatus 600 and a movable apparatus 700 according to the first embodiment.
Fig. 7 is a diagram for describing an imaging method of a camera control unit 605 according to the first embodiment.
Fig. 8 is a diagram illustrating an example of images of multiple split frames.
Fig. 9 is a diagram illustrating a relationship between a memory circuit and a buffer according to the first embodiment.
Fig. 10 is a flowchart showing details of an operation when area determination is made based on a recognition result and image processing is applied to a target area according to the first embodiment.
Fig. 11 is a diagram schematically depicting the result of recognition processing according to the first embodiment.
Fig. 12 is a functional block diagram of an imaging apparatus 600 and a movable apparatus 700 according to a second embodiment.
Fig. 13 is a flowchart showing details of an operation example when an image processing area and an image processing intensity are changed based on a recognition result according to the second embodiment.

### DESCRIPTION OF THE EMBODIMENTS

Hereinafter, with reference to the accompanying drawings, favorable modes of the present invention will be described using Embodiments. In each diagram, the same reference signs are applied to the same members or elements, and duplicate description will be omitted or simplified.

### <First Embodiment>

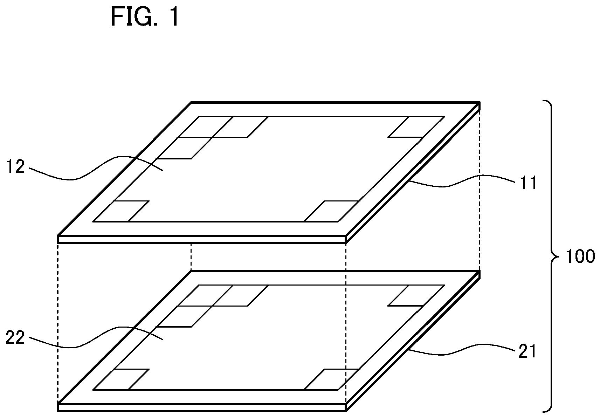

Fig. 1 is a diagram illustrating a configuration example of a photoelectric conversion element according to a first embodiment of the present invention. Hereinbelow, a photoelectric conversion element 100 will be described taking an example of an imaging apparatus having a so-called stacked structure in which two boards of a sensor board 11 and a circuit board 21 are stacked and electrically connected.

However, the imaging apparatus may have a so-called non-stacked structure in which a configuration included in a sensor board and a configuration included in a circuit board are arranged on a common semiconductor layer. The sensor board 11 includes a pixel area 12. The circuit board 21 includes a circuit area 22 that processes a signal detected in the pixel area 12.

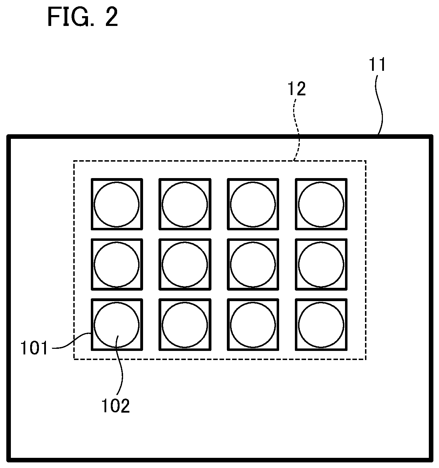

Fig. 2 is a diagram illustrating a configuration example of the sensor board 11. The pixel area 12 in the sensor board 11 includes a plurality of pixels 101 that are twodimensionally arranged in multiple row and column directions. Each pixel 101 has a photoelectric conversion unit 102 including an avalanche photodiode (hereinafter, referred to as an "APD").

Here, the photoelectric conversion unit 102 functions as a sensor unit that emits a pulse at a frequency according to a reception frequency of photons. Further, the numbers of rows and columns of the pixel array forming the pixel area 12 are not limited to a particular number.

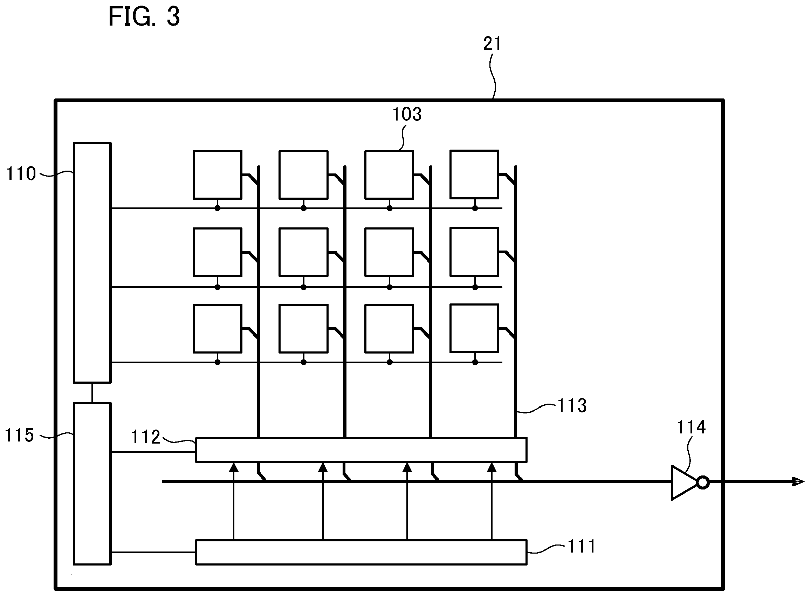

Fig. 3 is a diagram illustrating a configuration example of the circuit board 21. The circuit board 21 includes signal processing circuits 103 that process the charge photoelectrically converted by each of the photoelectric conversion units 102 of Fig. 2, a readout circuit 112, a control pulse generation unit 115, a horizontal scanning circuit 111, vertical signal lines 113, a vertical scanning circuit 110, and an output circuit 114.

The vertical scanning circuit 110 receives control pulses supplied from the control pulse generation unit 115 and sequentially supplies the control pulses to the multiple pixels arrayed in the row direction. A logic circuit such as a shift register or an address decoder is used for the vertical scanning circuit 110.

A signal output from the photoelectric conversion unit 102 of each pixel is processed by each signal processing circuit 103. The signal processing circuit 103 is provided with a counter, a memory, and the like, and the memory retains digital values. The horizontal scanning circuit 111 inputs a control pulse for sequentially selecting each column to each signal processing circuit 103 in order to read a signal from a memory of each pixel retaining a digital signal.

The vertical signal lines 113 receive the output of signals from the signal processing circuits 103 of the pixels in the row selected by the vertical scanning circuit 110. The signals output to the vertical signal lines 113 are output to the outside of the photoelectric conversion element 100 via the readout circuit 112 and the output circuit 114. The readout circuit 112 has multiple built-in buffers that are connected to the vertical signal lines 113.

Multiple signal processing circuits 103 are arranged in the area overlapping the pixel area 12 in a plan view as illustrated in Figs. 2 and 3. Thus, the vertical scanning circuit 110, the horizontal scanning circuit 111, the readout circuit 112, the output circuit 114, and the control pulse generation unit 115 are arranged so the circuits and units overlap in the gap between the end of the sensor board 11 and the end of the pixel area 12 in a plan view.

In other words, the sensor board 11 has the pixel area 12 and a non-pixel area disposed around the pixel area 12. In addition, the vertical scanning circuit 110, the horizontal scanning circuit 111, the readout circuit 112, the output circuit 114, and the control pulse generation unit 115 are arranged in the area overlapping the non-pixel area in a plan view.

Further, arrangement of the vertical signal lines 113 and arrangement of the readout circuit 112 and the output circuit 114 are not limited to that in the example illustrated in Fig. 3. For example, the vertical signal lines 113 may be disposed to extend in the row direction, and the readout circuit 112 may be disposed at the end to which the vertical signal lines 113 extend. In addition, the signal processing circuits 103 may not be necessarily provided one-to-one for all the photoelectric conversion units, and a configuration in which one signal processing circuit is shared by a plurality of photoelectric conversion units and signal processing is sequentially performed may be employed.

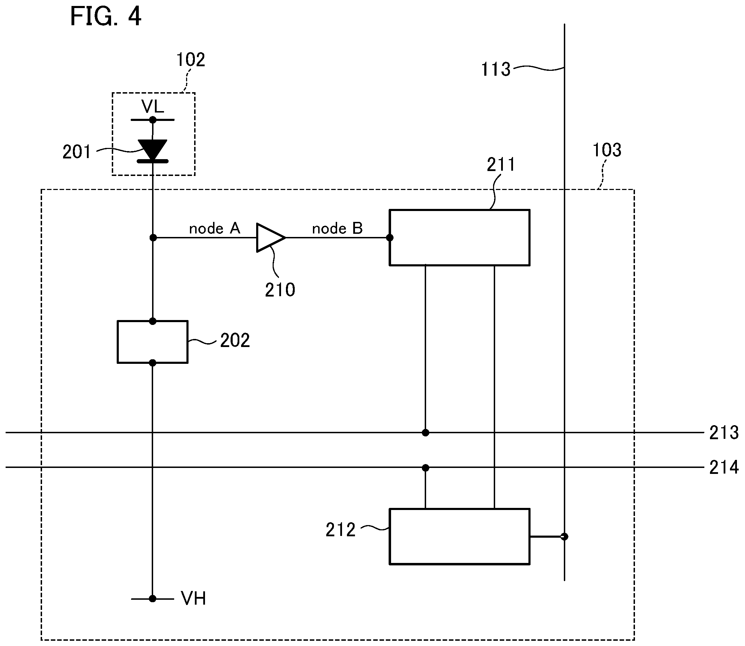

Fig. 4 is a diagram illustrating an equivalent circuit of a pixel 101 and a signal processing circuit 103 corresponding to the pixel 101 from Figs. 2 and 3. Each pixel 101 includes a photoelectric conversion unit 102 as a sensor part, a counter circuit 211, a memory circuit 212, and the like as illustrated in Fig. 4.

An APD 201 included in the photoelectric conversion unit 102 performs photoelectric conversion to generate charge pairs from incident light. One node of two nodes of the APD 201 is connected to a power source line from which a drive voltage VL (first voltage) is supplied. In addition, the other node of the two nodes of the APD 201 is connected to a power source line from which a drive voltage VH (second voltage) that is higher than the drive voltage VL is supplied.

In Fig. 4, one node of the APD 201 is an anode, and the other node of the APD 201 is a cathode. The anode and the cathode of the APD 201 receive supply of a reverse bias voltage that makes the APD 201 perform an avalanche multiplication operation. By supplying such a voltage, the charge generated from incident light causes avalanche multiplication, and an avalanche current is generated.

Note that, when a reverse bias voltage is supplied, there is the Geiger mode in which an APD is caused to operate at a voltage difference between the anode and the cathode being greater than the breakdown voltage and a linear mode in which an APD is caused to operate at a voltage difference between the anode and the cathode being close to or lower than the breakdown voltage. The APD caused to operate in the Geiger mode is called an SPAD. For an SPAD, for example, the drive voltage VL (first voltage) is - 30 V, and the drive voltage VH (second voltage) is 1 V.

The signal processing circuit 103 has a quenching element 202, a waveform shaping unit 210, a counter circuit 211, and a memory circuit 212. The quenching element 202 is connected to the power supply line from which the drive voltage VH is supplied and one node of the anode and the cathode of the APD 201.

The quenching element 202 functions as a load circuit (quenching circuit) at the time of signal multiplication by avalanche multiplication, and has the function of preventing avalanche multiplication by suppressing the voltage supplied to the APD 201 (quenching operation). In addition, the quenching element 202 has the function of causing a current corresponding to the voltage drop in the quenching operation to flow thereby returning the voltage supplied to the APD 201 to the drive voltage VH (recharging operation).

Fig. 4 illustrates the example in which the signal processing circuit 103 has the waveform shaping unit 210, the counter circuit 211, and the memory circuit 212 in addition to the quenching element 202.

The waveform shaping unit 210 shapes the voltage change of the cathode of the APD 201 obtained at the time of photon detection and outputs the pulse signal. For the waveform shaping unit 210, for example, an inverter circuit is used. Although Fig. 4 illustrates the example in which one inverter is used as the waveform shaping unit 210, a circuit in which a plurality of inverters are connected in series may be used, and another circuit exhibiting the waveform shaping effect may be used.

The counter circuit 211 counts the number of pulses output from the waveform shaping unit 210 and retains the count value. In addition, the signal retained in the counter circuit 211 is reset when a control pulse RES is supplied through a drive line 213. Here, the counter circuit 211 generates a signal based on the difference in count value between the start time and the end time of an accumulation period.

The memory circuit 212 receives supply of a control pulse SEL from the vertical scanning circuit 110 of Fig. 3 via a drive line 214 of Fig. 4 (not illustrated in Fig. 3) and switches between electrical connection and disconnection of the counter circuit 211 and the vertical signal line 113. The memory circuit 212 functions as a memory that temporarily stores count values of the counter circuit 211 and outputs an output signal from the counter circuit 211 of the pixel to the vertical signal line 113.

A switch such as a transistor may be disposed between the quenching element 202 and the APD 201 or between the photoelectric conversion unit 102 and the signal processing circuit 103 to switch electric connection. Likewise, the supply of the drive voltage VH or the drive voltage VL supplied to the photoelectric conversion unit 102 may be electrically switched by using a switch such as a transistor.

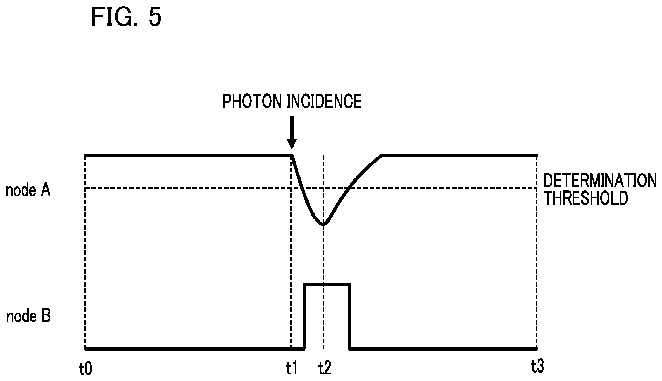

Fig. 5 is a diagram schematically illustrating a relationship between an operation of the APD 201 and an output signal. The input side of the waveform shaping unit 210 is denoted by node A, and the output side thereof is denoted by node B. A potential difference of VH and VL is applied to the APD 201 between a time t0 and a time t1. When photons are incident on the APD 201 at the time t1, avalanche multiplication occurs in the APD 201, an avalanche multiplication current flows to the quenching element 202, and the voltage of the node A drops.

When the amount of voltage drop further increases and the potential difference applied to the APD 201 decreases, the avalanche multiplication of the APD 201 stops at a time t2, and the voltage level of the node A does not drop to a level lower than or equal to a certain value.

Then, a current compensating the amount of voltage drop from the voltage VL flows to the node A between the time t2 and a time t3, and the node A becomes stabilized at the original potential level at the time t3. At this time, a partial waveform of the output waveform at the node A exceeding a certain threshold is shaped by the waveform shaping unit 210 and is output from the node B as a pulse signal.

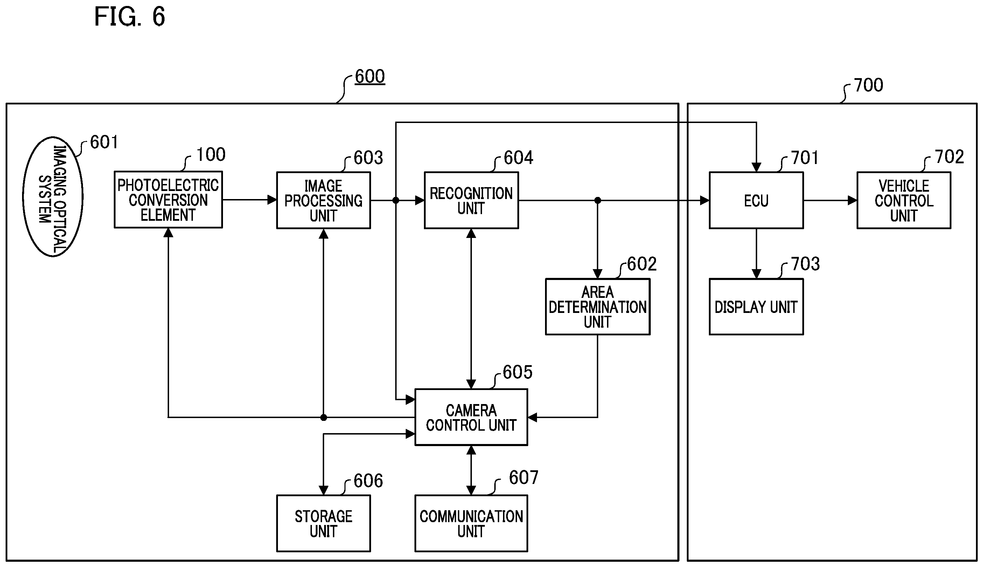

Fig. 6 is a functional block diagram of an imaging apparatus 600 and a movable apparatus 700 according to the first embodiment. In the present embodiment, an imaging system is configured by some functional blocks of the imaging apparatus 600 and the movable apparatus 700. Note that, some of the functional blocks illustrated in Fig. 6 are realized by causing a computer, which is not illustrated, included in the imaging apparatus 600 and the movable apparatus 700 to execute a computer program stored in a memory serving as a storage medium, which is not illustrated.

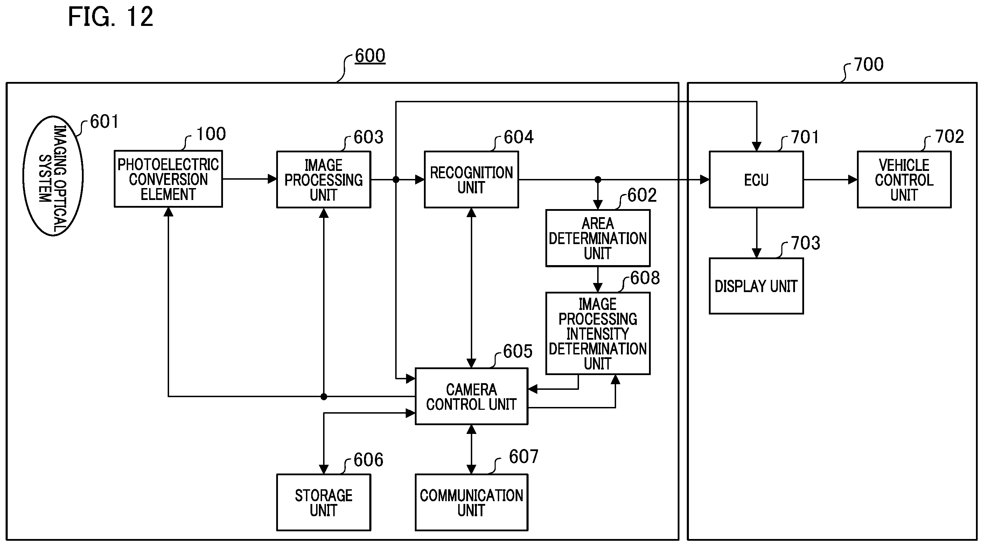

However, some or all of the functional blocks may be realized as hardware. A dedicated circuit (ASIC), a processor (reconfigurable processor or DSP), or the like can be used for the hardware. Alternatively, the functional blocks illustrated in Fig. 6 may not be built into the same housing, or may be configured as individual apparatuses connected to each other via a signal path. Note that the above-description relating to Fig. 6 similarly applies Fig. 12 to be described later.

The imaging apparatus 600 has the photoelectric conversion element 100, an imaging optical system 601, an area determination unit 602, an image processing unit 603, a recognition unit 604, a camera control unit 605, a storage unit 606, a communication unit 607, and the like. The photoelectric conversion element 100 includes an avalanche diode for photoelectrically converting optical images as described in Figs. 1 to 5.

The imaging apparatus according to the embodiment is mounted in the movable apparatus 700, and a camera unit including a set of the imaging optical system 601 and the photoelectric conversion element 100 is designed to capture in at least one direction, for example, forward, rearward, and a side of the movable apparatus. Note that a plurality of camera units may be provided in the movable apparatus 700.

The area determination unit 602 is an area determination unit that determines an area for which predetermined image processing is performed on an image signal acquired by the photoelectric conversion element 100 and determines a target area on which predetermined image processing is performed based on a recognition result output from the recognition unit 604, which will be described below. In other words, an image processing area is determined based on the result of image recognition. Area information with respect to an area determined by the area determination unit 602 is output to the camera control unit 605.

The image processing unit 603 performs image processing on a signal output from a pixel. In addition, the image processing unit 603 performs predetermined image processing on an image signal based on area information output from the camera control unit 605 and generates the final image signal. The predetermined image processing includes, for example, contour enhancement, black level correction, gamma curve adjustment, noise reduction, digital gain adjustment, demosaicing, data compression, and the like.

Note that, when the photoelectric conversion element 100 has on-chip color filters of R, G, B, or the like, it is desirable for the image processing unit 603 to perform processing such as white balance correction, color conversion, or the like. Note that the output of the image processing unit 603 is supplied to the recognition unit 604, an electric control unit (ECU) 701 of the movable apparatus 700, and the camera control unit 605.

The recognition unit 604 performs image recognition based on the result of image processing. In other words, surrounding people or vehicles are recognized by performing image recognition based on the image signal that has undergone image processing by the image processing unit 603, and a warning or the like is issued as necessary.

Note that, although the movable apparatus 700 has been described taking an example of a vehicle, for example, in the present embodiment, the movable apparatus may be any apparatus such as an aircraft, a train, a vessel, a drone, an AGV, or a robot as long as it is movable.

The camera control unit 605 includes a CPU serving as a computer and a memory storing a computer program, and controls each unit of the imaging apparatus 600 when the CPU causes the computer program stored in the memory to be executed.

Note that the camera control unit 605 functions as a control means, and controls the length of an exposure period of each frame of the photoelectric conversion element 100, a timing of control signal CLK, or the like via, for example, a control pulse generation unit of the photoelectric conversion element 100.

The storage unit 606 includes a recording medium, for example, a memory card, a hard disk, or the like to be able to store and read image signals. The communication unit 607 includes a wireless or wired interface on which a generated image signal is output to the outside of the imaging apparatus 600 and various signals are received from outside.

An ECU 701 includes a CPU serving as a computer and a memory storing a computer program, and controls each unit of the movable apparatus 700 when the CPU causes the computer program stored in the memory to be executed.

The output of the ECU 701 is supplied to a vehicle control unit 702 and a display unit 703. The vehicle control unit 702 functions as a movement control means that performs drive, stop, direction control, and the like of the vehicle as a movable apparatus based on the output of the ECU 701. Note that the vehicle control unit 702 as the movement control means controls motions of the movable apparatus based on the result of recognition processing using a signal generated at least in a first accumulation period. Note that the first accumulation period will be described below.

A display unit 703 functions as a display means, includes a display element, for example, a liquid crystal device, an organic EL, or the like, and is mounted in the movable apparatus 700. The display unit 703 displays various kinds of information about an image acquired by the photoelectric conversion element 100, the traveling state of the vehicle, and the like to the driver of the movable apparatus 700 by using, for example, a GUI based on the output of the ECU 701.

Note that the image processing unit 603, the recognition unit 604, and the like in Fig. 6 may not be mounted in the movable apparatus 700, or may be provided in an external terminal or the like, which is provided separately from the movable apparatus 700, for example, for remotely controlling the movable apparatus 700 or for monitoring traveling of the movable apparatus. An imaging apparatus including the imaging apparatus 600 of the present embodiment includes an apparatus constituted by a plurality of apparatuses connected on such a communication path.

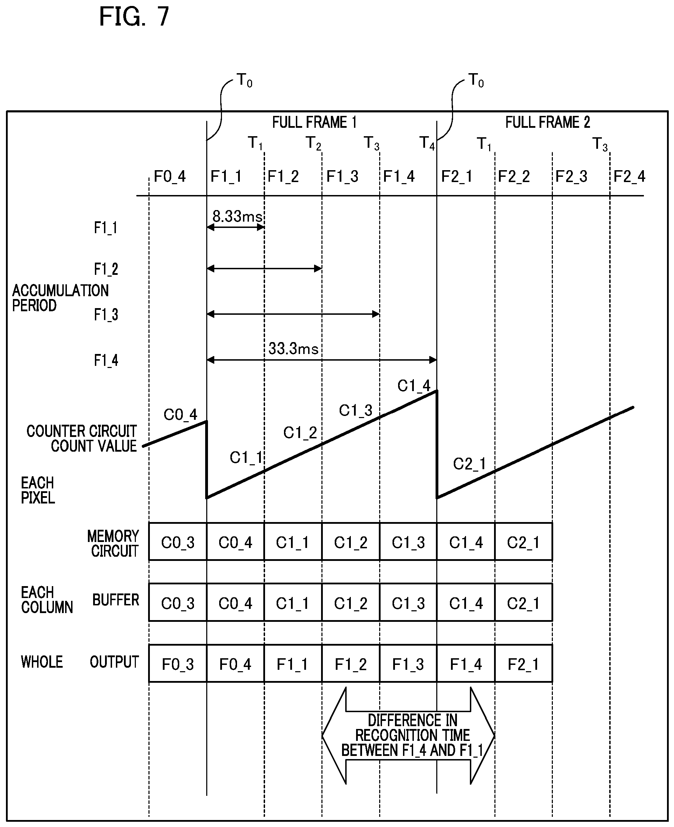

Fig. 7 is a diagram for describing an imaging method of the camera control unit 605 according to the first embodiment. In the present embodiment, for example, photoelectric conversion is periodically performed at a rate of 30 full frames/sec. Note that, in the present embodiment, one frame having a length of 33.3 ms, for example, is referred to as a full frame (or main frame), and a frame obtained by dividing a full frame into four is referred to as a frame (or sub frame).

In other words, a full frame 1 is divided into a frame 1_1, a frame 1_2, a frame 1_3, and a frame 1_4 in equal periods (each 8.33 ms) from a time T₀ to a time T₄ as illustrated in Fig. 7. Note that, in Fig. 7 and subsequent figures, frames 0_3, 0_4, 1_1, 1_2, 1_3, 1_4, 2_1, 2_2, 2_3, and 2_4 are shown as F0_3, F0_4, F1_1, F1_2, F1_3, F1_4, F2_1, F2_2, F2_3, and F2_4.

Note that, the frame 1_1 has an accumulation period from the start time T₀ to a time T₁ of the frame 1, and the frame 1_2 has an accumulation period from the time T₀ to a time T₂. In addition, the frame 1_3 has an accumulation period from the time T₀ to a time T₃, and the frame 1_4 has an accumulation period from the time T₀ to a time T₄. Note that, in the present embodiment, for example, the accumulation period from the time T₀ to the time T₁ is referred to as a first accumulation period, and the accumulation period from the time T₀ to the time T₄ is referred to as a second accumulation period.

In addition, the counter circuit 211 is reset at the time T₀, and each of count values C1_1, C1_2, C1_3, and C1_4 is acquired from the counter circuit 211 at the times T₁ to T₄.

Furthermore, the count values C1_1, C1_2, C1_3, and C1_4 are temporarily retained in the memory circuit 212. In addition, signals corresponding to one row that are temporarily stored in the memory circuit 212 are sequentially output from the photoelectric conversion element via a buffer of the readout circuit 112.

As described above, in the present embodiment, signals accumulated in the period of the frame 1_1 are read out from the time T₁ to the time T₂, and quickly processed by the recognition unit 604. Accordingly, image recognition can be quickly performed. Likewise, signals accumulated in the period of the frames 1_2, 1_3, and 1_4 are sequentially read out at each of the time T₂ to T₃, T₃ to T₄, and T₄ to T₁, and thus image recognition can be repeatedly performed.

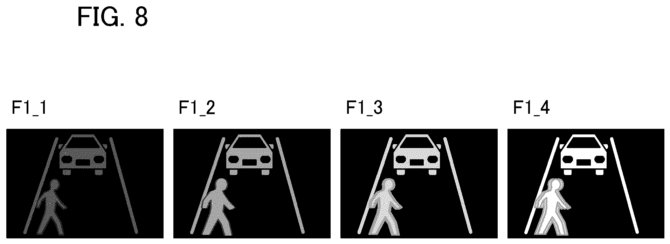

Fig. 8 is a diagram illustrating an example of images of a plurality of split frames. Even though the image of the frame 1_1 is dark because the accumulation time is short as illustrated in Fig. 8, the subject blur of the person who is jumping in is small. On the other hand, because the accumulation times become longer in the order of the frame 1_2, the frame 1_3, and the frame 1_4, subject blur easily occurs. Note that blur is unlikely to occur on the stopped vehicle or the white lines, and contrast is likely to improve as the accumulation time becomes longer.

As described above, in the control step of the camera control unit 605 in the present embodiment, the accumulation operation of the first accumulation period and the second accumulation period within one full frame period is performed. In addition, the first accumulation period is shorter than the second accumulation period, and a signal generated in the first accumulation period is controlled such that it is output during the period from the end of the first accumulation period to the end of the second accumulation period.

In addition, in the present embodiment, the first accumulation period overlaps the second accumulation period, and the first accumulation period and the second accumulation period simultaneously start. Furthermore, the end time of the second accumulation period is a break of a frame, and the second accumulation period is an integer multiple of the first accumulation period. In other words, the end time of the second accumulation period coincides with the end time of the full frame period.

However, the second accumulation period does not need to be an integer multiple of the first accumulation period. The second accumulation period may be longer than the first accumulation period (the first accumulation period may be shorter than the second accumulation period), and the end of the second accumulation period may be later than the end of the first accumulation period.

In other words, an image having a shorter accumulation period and an image having a longer accumulation period are created, the timing at which the shorter accumulation period ends is set to be earlier than the timing at which the longer accumulation period ends, and the image are output to be transmitted to the recognition unit in the later stage as soon as the shorter accumulation period ends. In addition, the subject is recognized based on the signal generated at least in the first accumulation period. The recognition unit 604 as a recognition means recognizes the subject based on the signal generated at least in the first accumulation period.

Thus, whereas image recognition is not possible if one full frame period does not pass in the related art, in the present embodiment, image recognition can be performed after a 1/4 full frame period at the shortest, and when the movable apparatus moves at high speed, for example, an obstacle or the like can be quickly recognized. Thus, braking can be swiftly applied. Alternatively, obstacles can be avoided earlier.

Note that, since the contrast of an image having a long accumulation period can be improved, it can be used as an image for display. In other words, images having a short accumulation time are suitable for quick subject recognition, and images having a long accumulation time are suitable for images for display. As described above, a display apparatus of the present embodiment uses signals generated at least in the second accumulation period to display images. Note that, the recognition unit 604 may further recognize a subject based on a signal generated at least in the second accumulation period.

In addition, since APDs are used in the present embodiment and accumulated charges do not deteriorate due to readout, unlike CMOS sensors, accumulation periods can overlap. In addition, since there is not readout noise, the original signal does not deteriorate no matter how many times readout is performed in one accumulation.

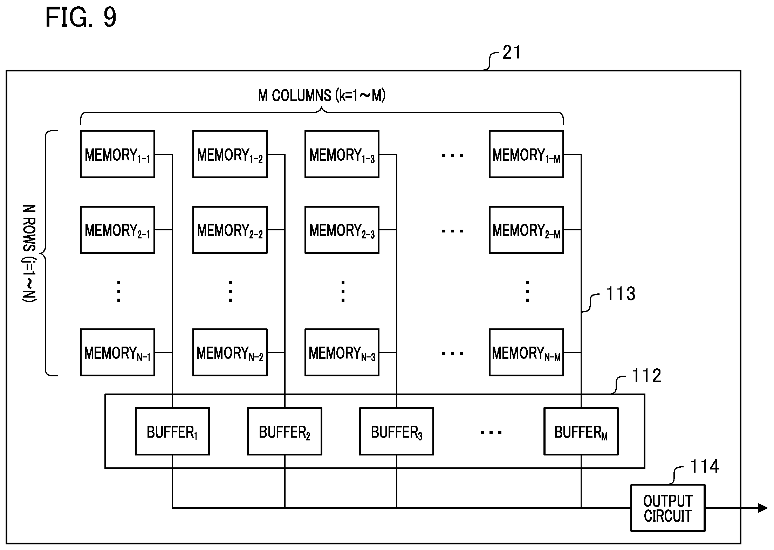

Fig. 9 is a diagram illustrating a relationship between a memory circuit and a buffer according to the first embodiment. Fig. 9 illustrates a state in which the memory circuits 212 in the signal processing circuit 103 of Fig. 3 are arrayed in N row and M columns, and the memory circuits are denoted by a memory₁₋₁ to a memory_{N-M}, respectively. In addition, a buffer₁ to a buffer_{M} in Fig. 9 represent buffers included in the readout circuit 112 in Fig. 3. The output circuit 114 in Fig. 9 corresponds to the output circuit 114 in Fig. 3.

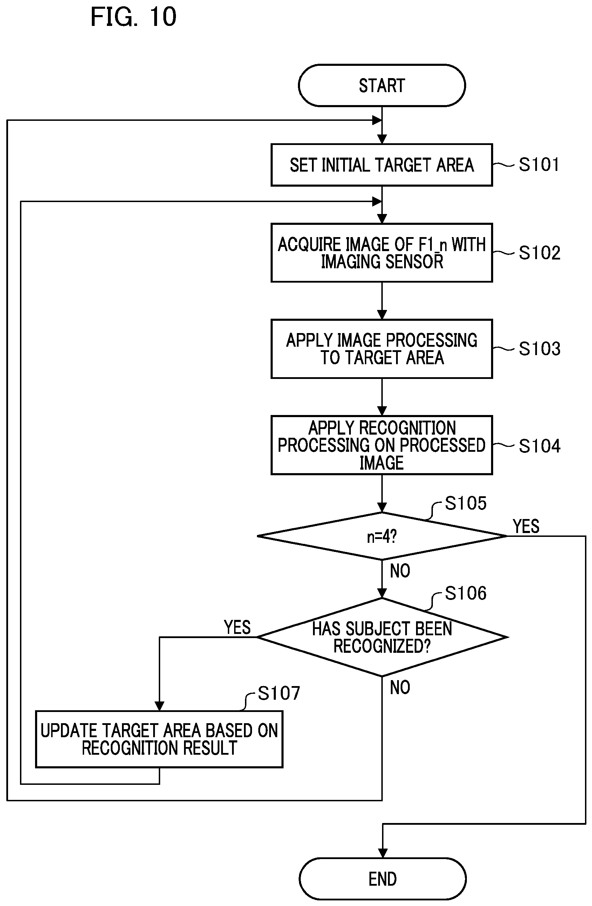

Fig. 10 is a flowchart showing details of an operation when area determination is made based on a recognition result and image processing is applied to a target area according to the first embodiment, and describes a first example of an operation of changing an image processing range based on a recognition result of the present embodiment by using Figs. 6 and 10.

Note that, the operations of steps of the flowchart of Fig. 10 are sequentially performed by a CPU serving as a computer included in the camera control unit 605 executing a computer program stored in the memory.

In step S101, the CPU uses the area determination unit 602 to set an initial target area that will be subjected to image processing. At this time, the initial target area may be an area set in advance, or an area used in the previous frame.

In step S102, the CPU acquires an image signal of a frame 1_n with the imaging sensor. Here, the frame 1_n represents one of the frame (F) 1_1 to the frame 1_4 in Fig. 7.

In step S103, the CPU applies image processing to the target area in the set image by using the image processing unit 603. In other words, the image processing unit 603 performs image processing on the area set (determined) by the area determination unit 602. Here, step S103 functions as an image processing step of performing image processing on signals output from pixels, and performs predetermined image processing on the image processing area.

Here, the image processing includes contour enhancement, black level correction, gamma curve adjustment, noise reduction, digital gain adjustment, demosaicing, data compression, and the like as described above. The image signals that have undergone image processing by the image processing unit 603 are output to the recognition unit 604.

In step S104, the CPU applies recognition processing to the processed image by using the recognition unit 604. For the recognition result generated at this time, information about at least one of the subject position, the subject recognition accuracy, the subject type, and the like is output as the recognition result. The output recognition result is output to the area determination unit 602 and the ECU 701.

Here, step S104 functions as a recognition step of performing image recognition based on the result of the image processing, and image processing is performed based on signals that have undergone predetermined image processing.

In step S105, the CPU checks the current frame (the value of n). For the frames 1_1, 1_2, and 1_3, the processing proceeds to step S106. The processing on the frame 1_4 ends and proceeds to the next frame 2_1. Here, although the maximum value of n is set to 4 in the present embodiment, this is an example, and n may have a value other than 4 (a value not satisfying n = 4).

In step S106, the CPU determines whether the subject has been recognized based on the result of the recognition processing. If the subject has been detected, the operation proceeds to step S107. If the subject has not been recognized, the operation proceeds to step S101.

Since the subject has been recognized in step S107, the CPU causes the area determination unit 602 to update such that an area including a part or all of the recognized subject is included in the image-processing target area. Note that, for a target area, a large area on the movement direction side may be determined taking the speed of the recognized subject and the movement direction of the recognized subject into consideration.

In other words, in step S107, the area determination unit 602 determines an area to which image processing is applied according to the recognition result output from the recognition unit 604. Here, step S107 functions as an area determination step of determining an image processing area based on the result of image recognition.

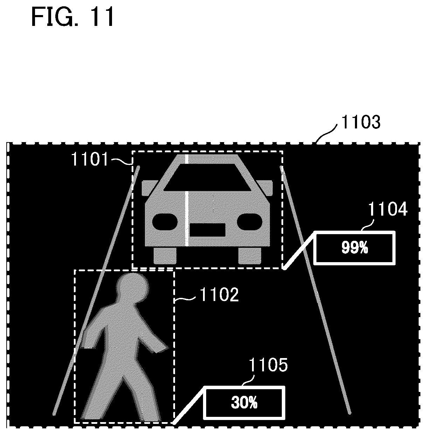

Here, Fig. 11 is a diagram schematically depicting the result of recognition processing according to the first embodiment, illustrating an example of an image in which areas have been determined based on recognition results. The area 1101 in the image is an area in which a vehicle has been recognized. The area 1102 is an area in which a person has been recognized.

The area 1103 is an area excluding the area 1101 and the area 1102 in the angle of view. A range to which image processing is applied is an area including a part or all of a recognized subject, such as the area 1101 and the area 1102. Note that reference numeral 1104 indicates the recognition accuracy of the subject in the area 1101, and is displayed with 99% in Fig. 11. Meanwhile, reference numeral 1105 indicates the recognition accuracy of the subject in the area 1102, and is displayed with 30%.

In addition, for a size of an area, a large area in the movement direction of the subject may be determined taking the recognized subject that will move in the next frame into consideration as described above. When the subject is not recognized, an initial area set in advance may be determined, or the entire angle of view may be determined as an area. In step S107, the area information determined (updated) by the area determination unit 602 is output to the camera control unit 605, and the processing proceeds to step S 102 by increasing the value n by one.

In the present embodiment, the image processing unit 603 performs predetermined image processing on an image processing area, and the recognition unit 604 performs image recognition based on a signal that has undergone the predetermined image processing as described above. In other words, by changing and processing the range in which image processing is applied according to the recognition result, the image processing range can be reduced, and the time required for recognition can be slashed.

### <Second Embodiment>

Fig. 12 is a functional block diagram of an imaging apparatus 600 and a movable apparatus 700 according to a second embodiment, and an image processing range and an image processing intensity are designed to be changed based on a recognition result, an accumulation period, and the like in the second embodiment. Note that, since the same reference numerals in Fig. 12 as those in Fig. 6 represent the same functional blocks, and description thereof will be omitted.

In Fig. 12, area information determined by an area determination unit 602 is output to an image processing intensity determination unit 608. The image processing intensity determination unit 608 determines an image processing intensity at least based on the result of image recognition by a recognition unit.

In the present embodiment, the image processing intensity determination unit 608 determines an image processing intensity when an image processing unit 603 performs image processing based on a recognition result output from a recognition unit 604, area information output from the area determination unit 602, and an accumulation period output from a camera control unit 605.

The reference numeral 1104 of Fig. 11 represents the recognition accuracy of the vehicle as described above, for example, and here the subject has been recognized as a "vehicle" at "99%" accuracy. In addition, recognition accuracy 1105 represents the recognition accuracy of the person, and here the subject has been recognized as a "person" at "30%" accuracy. As described above, when recognition accuracy differs depending on each subject, the image processing intensity with respect to a subject with high recognition accuracy is not changed. Alternatively, the image processing intensity is lowered.

On the other hand, the image processing intensity with respect to a subject with low recognition accuracy is relatively increased. In addition, the image processing intensity is changed according to the accumulation period output from the camera control unit 605. In the first accumulation period and the second accumulation period, for example, the image is formed to have a lot of noise and to be darker because the first accumulation period is shorter.

For this reason, the intensity of noise reduction is set to be higher for the image signal generated in the first accumulation period than for the image signal acquired in the second accumulation period. In addition, the image processing intensity determination unit 608 outputs the area information and the image processing intensity information for each piece of the area information to the camera control unit 605.

The camera control unit 605 receives the area information and the image processing intensity information from the image processing intensity determination unit 608 described above and outputs the information to the image processing unit 603. In addition, The camera control unit 605 outputs information about the accumulation time to the image processing intensity determination unit 608. Then, the image processing unit 603 performs image processing on the area determined by the area determination unit 602 and performs image processing on each area at the intensity determined by the image processing intensity determination unit 608.

Note that, when no subject is recognized, an area set in advance may be determined, or the entire angle of view may be determined as an area as described above. In addition, the area may be changed for each image processing block (image processing process). For example, processing of black level correction may be performed on the entire image in order to avoid coloration, and other image processing blocks (image processing processes) may be operated to limit the area.

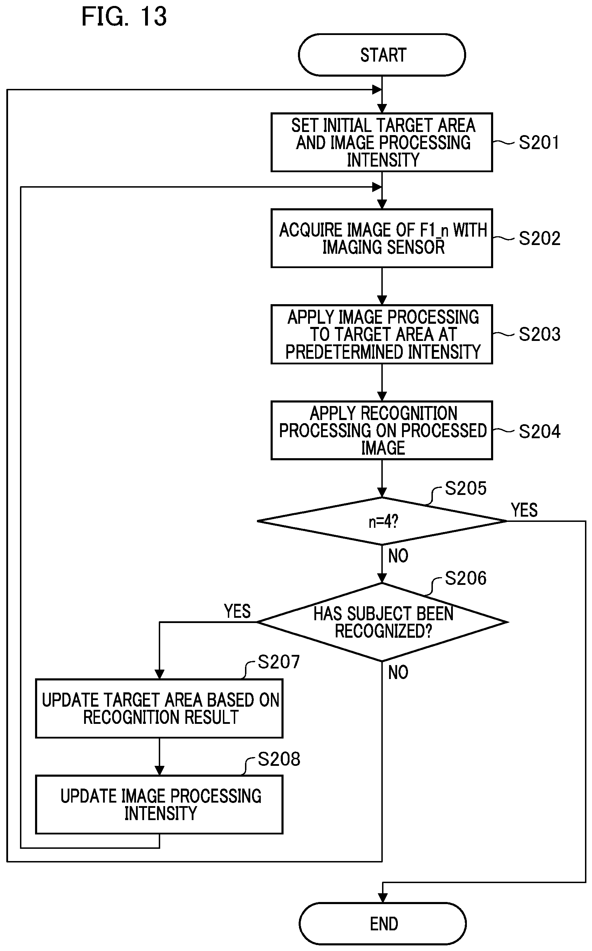

Fig. 13 is a flowchart showing details of an operation example when an image processing area and an image processing intensity are changed based on a recognition result according to the second embodiment. Note that, the operations of steps of the flowchart of Fig. 13 are sequentially performed by a CPU serving as a computer included in the camera control unit 605 executing a computer program stored in the memory.

In step S201, the CPU sets an initial target area and an initial image processing intensity to perform image processing. At this time, the initial target area and the initial image processing intensity may be an area set in advance and an image processing intensity for the area, or an area used in the previous frame and an image processing intensity for the area.

In step S202, the CPU acquires an image signal of a frame 1_n with the imaging sensor. Here, the frame 1_n represents one of the frame (F) 1_1 to the frame 1_4 in Fig. 7.

In step S203, the CPU applies image processing to each target area in the image set in step S201 at the set intensity. Here, the image processing includes contour enhancement, black level correction, gamma curve adjustment, noise reduction, digital gain adjustment, demosaicing, data compression, and the like.

In step S204, the CPU applies recognition processing to the processed image. The recognition result generated at this time includes information about at least one of the subject position, the subject recognition accuracy, the subject type, and the like.

In step S205, the CPU checks the current frame (the value of n). For the frames 1_1, 1_2, and 1_3, the processing proceeds to step S206. The processing on the frame 1_4 ends and proceeds to the next frame 2_1. Here, the maximum value of n may be a value other than 4 (a value not satisfying n = 4).

In step S206, the CPU checks whether the subject has been recognized based on the result of the recognition processing. If the subject has been detected, the operation proceeds to step S207. If the subject has not been recognized, the operation proceeds to step S201.

Since the subject has been recognized in step S207, the CPU updates the area including the subject to be an image-processing target area. At this time, the target area is an area including a part or all of the recognized subject. In addition, for the area, a large area may be set according to the movement direction or the movement speed taking the recognized subject that will move in the next frame into consideration.

In step S208, the CPU changes the image processing intensity based on the information of the recognition result and the exposure time. For example, recognition accuracy of the recognized subject is output as the recognition result. Operations are performed such that, when the recognition accuracy is low, the image processing intensity is updated to increase, and when the recognition accuracy is high, the image processing intensity is not changed (or the image processing intensity is lowered). In addition, the image processing intensity may be changed according to the exposure time.

In other words, the exposure time becomes shorter as the value of n of the frame 1_n is smaller in the present embodiment. Images have a tendency to have more darkness and noise as the exposure time becomes shorter. Here, when the exposure time is short, it is desirable to prevent the recognition accuracy from dropping by applying image processing at a higher intensity.

As described above, in the second embodiment, by performing processing by changing the range in which image processing is applied according to the recognition result and changing the image processing intensity for each range, the recognition processing range and the image processing range can be reduced, and the delay time can be shortened. In addition, image processing effective for recognition processing can be performed. Furthermore, since accumulation results of a short period of time can be read in the middle of the processing according to the second embodiment, image processing and recognition processing can be quickly performed.

Although the present embodiment has been described above in detail based on exemplary embodiments, the present invention is not limited thereto, and various modifications can be made based on the gist of the present invention and are not excluded from the scope of the present invention.

In addition, in the above-described embodiments, for example, accumulation is performed in the 1/4 full frame period at the shortest, and readout is performed in every 1/4 full frame period. However, an actual accumulation period may be shorter than the 1/4 full frame period by resetting the counter circuit in the middle of the accumulation period of the frame 1_1 in Fig. 7 according to brightness, recognition accuracy, or the like of the subject.

Alternatively, the counter circuit may be reset at the time T₁ first in Fig. 7, or the like. Thus, the count value read at the time T₄ may be adjusted.

While the present invention has been described with reference to exemplary embodiments, it is to be understood that the invention is not limited to the disclosed exemplary embodiments but by the scope of the following claims. Further, the above first embodiment to the third embodiment, and the like may be appropriately combined.

In addition, as a part or the whole of the control according to the embodiments, a computer program realizing the function of the embodiments described above may be supplied to the imaging system or the like through a network or various storage media. Then, a computer (or a CPU, an MPU, or the like) of the imaging system or the like may be configured to read and execute the program. In such a case, the program and the storage medium storing the program configure the present invention.

In addition, the present invention includes those realized using at least one processor or circuit configured to perform functions of the embodiments explained above. For example, a plurality of processors may be used for distribution processing to perform functions of the embodiments explained above.

## Claims

1. An imaging system comprising:
a plurality of pixels (101) each including a sensor unit (102) configured to emit pulses according to reception of photons, and a counter (211) configured to count the number of the pulses;
a generating unit (211) configured to generate, for each of the pixels, a first signal based on a difference in count values of the counter between a start time and an end time of a first accumulation period and generate, for each of the pixels, a second signal based on a difference in count values of the counter between a start time and an end time of a second accumulation period, wherein the first accumulation period and the second accumulation period are within one full frame period and the first accumulation period is shorter than the second accumulation period,
an output unit (110-115) configured to output the first signal during a period from an end of the first accumulation period to an end of the second accumulation period and to output the second signal during a period starting from the end of the second accumulation period;
an image processing unit (603) configured to perform a first image processing on the first signal;
a recognition unit (604) configured to perform image recognition of the first signal that has performed the first image processing; and
an area determination unit (602) configured to determine an image processing area based on a result of the image recognition,
wherein the image processing unit performs a second image processing on the second signal only in the image processing area determined by the area determination unit.

2. The imaging system according to claim 1, comprising an image processing intensity determination unit configured to determine an image processing intensity based on a result of the image recognition by the recognition unit.

3. The imaging system according to claim 1, wherein the first accumulation period overlaps the second accumulation period.

4. The imaging system according to claim 1, wherein the first accumulation period and the second accumulation period simultaneously start.

5. The imaging system according to claim 1, wherein an end time of the second accumulation period coincides with an end time of the full frame period.

6. The imaging system according to claim 1, comprising a display unit configured to display the second signal as an image.

7. The imaging system according to claim 1, wherein the sensor unit includes an avalanche photodiode.

8. A movable apparatus comprising:
the imaging system according to any one of claims 1 to 7; and
a movement control means configured to control an operation of the movable apparatus based on a result of recognition processing of the first signal.

9. An imaging method for an imaging system having a plurality of pixels (101) each including a sensor unit (102) configured to emit pulses at a frequency according to a reception frequency of photons and a counter (211) configured to count the number of the pulses, the imaging method comprising:
generating, for each of the pixels, a first signal based on a difference in count values of the counter between a start time and an end time of a first accumulation period and generating, for each of the pixels, a second signal based on a difference in count values of the counter between a start time and an end time of a second accumulation period, wherein the first accumulation period and the second accumulation period are within one full frame period and the first accumulation period is shorter than the second accumulation period,
outputting the first signal during a period from an end of the first accumulation period to an end of the second accumulation period;
performing a first image processing on the first signal (S103);
performing image recognition (S104) of the first signal that has undergone the predetermined the first image processing; and
determining (S107) an image processing area based on a result of the image recognition,
outputting the second signal during a period starting from the end of the second accumulation period;
performing a second image processing on the second signal only in the image processing area.

## Patentansprüche

1. Abbildungssystem, das aufweist:
eine Vielzahl von Pixeln (101), die jeweils eine Sensoreinheit (102), die konfiguriert ist, Pulse entsprechend einem Empfang von Photonen zu emittieren, und einen Zähler (211), der konfiguriert ist, die Anzahl der Pulse zu zählen, enthält;
eine Erzeugungseinheit (211), die konfiguriert ist, für jeden der Pixel ein erstes Signal basierend auf einer Differenz von Zählwerten des Zählers zwischen einer Startzeit und einer Endzeit einer ersten Akkumulationsperiode zu erzeugen, und für jeden der Pixel ein zweites Signal basierend auf einer Differenz von Zählwerten des Zählers zwischen einer Startzeit und einer Endzeit einer zweiten Akkumulationsperiode zu erzeugen, wobei die erste Akkumulationsperiode und die zweite Akkumulationsperiode innerhalb einer vollen Rahmenperiode sind und die erste Akkumulationsperiode kürzer als die zweite Akkumulationsperiode ist,
eine Ausgabeeinheit (110-115) die konfiguriert ist, das erste Signal während einer Periode von einem Ende der ersten Akkumulationsperiode bis zu einem Ende der zweiten Akkumulationsperiode auszugeben und das zweite Signal während einer Periode, die von dem Ende der zweiten Akkumulationsperiode startet, auszugeben;
eine Bildverarbeitungseinheit (603), die konfiguriert ist, ein erstes Bildverarbeiten an dem ersten Signal durchzuführen;
eine Erkennungseinheit (604), die konfiguriert ist, eine Bilderkennung an dem ersten Signal, an dem das erste Bildverarbeiten durchgeführt wurde, durchzuführen; und
eine Flächenbestimmungseinheit (602), die konfiguriert ist, eine Bildverarbeitungsfläche basierend auf einem Ergebnis der Bilderkennung zu bestimmen,
wobei die Bildverarbeitungseinheit ein zweites Bildverarbeiten an dem zweiten Signal nur in der Bildverarbeitungsfläche die durch die Flächenbestimmungseinheit bestimmt wird, durchführt.

2. Abbildungssystem nach Anspruch 1, das eine Bildverarbeitungsintensitätsbestimmungseinheit, die konfiguriert ist, eine Bildverarbeitungsintensität basierend auf einem Ergebnis der Bilderkennung durch die Erkennungseinheit zu bestimmen, aufweist.

3. Abbildungssystem nach Anspruch 1, wobei die erste Akkumulationsperiode mit der zweiten Akkumulationsperiode überlappt.

4. Bildverarbeitungssystem nach Anspruch 1, wobei die erste Akkumulationsperiode und die zweite Akkumulationsperiode gleichzeitig starten.

5. Abbildungssystem nach Anspruch 1, wobei eine Endzeit der zweiten Akkumulationsperiode mit einer Endzeit der ganzen Rahmenperiode zusammenfällt.

6. Abbildungssystem nach Anspruch 1, das eine Anzeigeeinheit, die konfiguriert ist, das zweite Signal als ein Bild anzuzeigen, aufweist.

7. Abbildungssystem nach Anspruch 1, wobei die Sensoreinheit eine Lawinenphotodiode enthält.

8. Bewegbare Vorrichtung, die aufweist:
das Abbildungssystem nach einem der Ansprüche 1 bis 7; und
eine Bewegungssteuerungseinrichtung, die konfiguriert ist, einen Betrieb der bewegbaren Vorrichtung basierend auf einem Ergebnis eines Erkennungsverarbeitens an dem ersten Signal zu steuern.

9. Abbildungsverfahren für ein Abbildungssystem, das eine Vielzahl von Pixeln (101), die jeweils eine Sensoreinheit (102), die konfiguriert ist, Pulse mit einer Frequenz gemäß einer Empfangsfrequenz von Photonen zu emittieren, und einen Zähler (211) der konfiguriert ist, die Anzahl der Pulse zu zählen, enthalten, aufweist, wobei das Abbildungsverfahren aufweist:
Erzeugen eines ersten Signals für jeden der Pixel basierend auf einer Differenz von Zählwerten des Zählers zwischen einer Startzeit und einer Endzeit einer ersten Akkumulationsperiode und Erzeugen eines zweiten Signals für jeden der Pixel basierend auf einer Differenz von Zählwerten des Zählers zwischen einer Startzeit und einer Endzeit einer zweiten Akkumulationsperiode, wobei die erste Akkumulationsperiode und die zweite Akkumulationsperiode innerhalb einer ganzen Rahmenperiode sind und die erste Akkumulationsperiode kürzer als die zweite Akkumulationsperiode ist,
Ausgeben des ersten Signals während einer Periode von einem Ende der ersten Akkumulationsperiode bis zu einem Ende der zweiten Akkumulationsperiode;
Durchführen einer ersten Bildverarbeitung an dem ersten Signal (S103);
Durchführen einer Bilderkennung (S104) an dem ersten Signal, das dem vorbestimmten ersten Bildverarbeiten unterzogen wurde; und
Bestimmen (S107) einer Bildverarbeitungsfläche basierend auf einem Ergebnis der Bilderkennung,
Ausgeben des zweiten Signals während einer Periode, die von dem Ende der zweiten Akkumulationsperiode startet;
Durchführen einer zweiten Bildverarbeitung an dem zweiten Signal nur in der Bildverarbeitungsfläche.

## Revendications

1. Système d'imagerie comprenant :
une pluralité de pixels (101) incluant chacun une unité de capteur (102) configurée pour émettre des impulsions selon la réception de photons, et un compteur (211) configuré pour compter le nombre d'impulsions ;
une unité de génération (211) configurée pour générer, pour chacun des pixels, un premier signal basé sur une différence en valeurs de comptage du compteur entre un temps de début et un temps de fin d'une première période d'accumulation et générer, pour chacun des pixels, un second signal basé sur une différence en valeurs de comptage du compteur entre un temps de début et un temps de fin d'une seconde période d'accumulation, dans lequel la première période d'accumulation et la seconde période d'accumulation sont dans une période de trame entière et la première période d'accumulation est plus courte que la seconde période d'accumulation,
une unité de sortie (110-115) configurée pour sortir le premier signal durant une période depuis une fin de la première période d'accumulation jusqu'à une fin de la seconde période d'accumulation et pour sortir le second signal pendant une période commençant à partir de la fin de la seconde période d'accumulation ;
une unité de traitement d'image (603) configurée pour réaliser un premier traitement d'image sur le premier signal ;
une unité de reconnaissance (604) configurée pour réaliser une reconnaissance d'image du premier signal qu'a réalisé le premier traitement d'image ; et
une unité de détermination d'aire (602) configurée pour déterminer une aire de traitement d'image en se basant sur un résultat de la reconnaissance d'image,
dans lequel l'unité de traitement d'image réalise un second traitement d'image sur le second signal seulement dans l'aire de traitement d'image déterminée par l'unité de détermination d'aire.

2. Système d'imagerie selon la revendication 1, comprenant une unité de détermination d'intensité de traitement d'image configurée pour déterminer une intensité de traitement d'image en se basant sur un résultat de la reconnaissance d'image par l'unité de reconnaissance.

3. Système d'imagerie selon la revendication 1, dans lequel la première période d'accumulation recouvre la seconde période d'accumulation.

4. Système d'imagerie selon la revendication 1, dans lequel la première période d'accumulation et la seconde période d'accumulation commencent simultanément.

5. Système d'imagerie selon la revendication 1, dans lequel un temps de fin de la seconde période d'accumulation coïncide avec un temps de fin de la période de trame entière.

6. Système d'imagerie selon la revendication 1, comprenant une unité d'affichage configurée pour afficher le second signal comme une image.

7. Système d'imagerie selon la revendication 1, dans lequel l'unité de capteur inclut une photodiode à avalanche.

8. Dispositif mobile comprenant :
le système d'imagerie selon l'une quelconque des revendications 1 à 7 ; et
des moyens de commande de mouvement configurés pour commander un fonctionnement du dispositif mobile en se basant sur un résultat de traitement de reconnaissance du premier signal.

9. Procédé d'imagerie pour un système d'imagerie ayant une pluralité de pixels (101) incluant chacun une unité de capteur (102) configurée pour émettre des impulsions à une fréquence selon une fréquence de réception de photons et un compteur (211) configuré pour compter le nombre d'impulsions le procédé d'imagerie comprenant :
de générer, pour chacun des pixels, un premier signal basé sur une différence en valeurs de comptage du compteur entre un temps de début et un temps de fin d'une première période d'accumulation et de générer, pour chacun des pixels, un second signal basé sur une différence en valeurs de comptage du compteur entre un temps de début et un temps de fin d'une seconde période d'accumulation, dans lequel la première période d'accumulation et la seconde période d'accumulation sont dans une période de trame entière et la première période d'accumulation est plus courte que la seconde période d'accumulation,
de sortir le premier signal durant une période d'une fin de la première période d'accumulation jusqu'à une fin de la seconde période d'accumulation ;
de réaliser un premier traitement d'image sur le premier signal (S103) ;
de réaliser une reconnaissance d'image (S104) du premier signal qui a subi le premier traitement d'image prédéterminé ; et
de déterminer (S107) une aire de traitement d'image en se basant sur un résultat de la reconnaissance d'image,
de sortir le second signal pendant une période commençant à partir de la fin de la seconde période d'accumulation ;
de réaliser un second traitement d'image sur le second signal seulement dans l'aire de traitement d'image.
